Europäisches Patentamt

**European Patent Office**

Office européen des brevets

(19)

(11) **EP 0 921 496 B1**

(12) **FASCICULE DE BREVET EUROPEEN**

(45) Date de publication et mention
de la délivrance du brevet:
**11.05.2005 Bulletin 2005/19**

(51) Int Cl.⁷: **G06T 5/00**

(21) Numéro de dépôt: **98204106.3**

(22) Date de dépôt: **03.12.1998**

(54) **Procédé de traitement d'une image ou le bruit dépend du signal**

Bildverarbeitungsverfahren bei dem das Rauschen vom Signal abhängt

Image processing method in which noise is signal dependent

(84) Etats contractants désignés:
**DE FR GB**

(30) Priorité: **09.12.1997 FR 9715566**

(43) Date de publication de la demande:
**09.06.1999 Bulletin 1999/23**

(73) Titulaire: **Koninklijke Philips Electronics N.V.**
**5621 BA Eindhoven (NL)**

(72) Inventeurs:
• **Florent, Raoul, Societe Civile S.P.I.D.**
**75008 Paris (FR)**
• **Makram-Ebeid, Sherif, Societe Civile S.P.I.D.**
**75008 Paris (FR)**
• **Soyer, Christel, Societe Civile S.P.I.D.**
**75008 Paris (FR)**

(74) Mandataire: **Charpail, François et al**
**Société Civile S.P.I.D.**
**156, Boulevard Haussmann**
**75008 Paris (FR)**

(56) Documents cités:
• **KOFIDIS E.A.: "SEGMENTATION-BASED
L-FILTERING OF SPECKLE NOISE IN
ULTRASONIC IMAGES" PROCEEDINGS OF THE
SPIE, vol. 2180, 7 - 9 février 1994, pages 280-289,
XP002075633 USA**

**Description**

L'invention concerne un procédé de traitement d'image pour déterminer une courbe de bruit relative à une image, comprenant une acquisition d'une image formée de pixels ayant une intensité incluant une composante de signal et une composante de bruit dépendant du signal. L'invention concerne également un procédé de traitement d'image pour réduire le bruit d'une image et un appareil d'imagerie médicale ayant un système pour mettre en oeuvre un tel procédé.

L'invention trouve son application en particulier dans un système d'imagerie médicale à rayons X. Dans les images de rayons X, le bruit dépend du signal. Ceci signifie que le niveau de bruit n'est pas identique dans les zones sombres et dans les zones claires de l'image. Le bruit peut être défini d'une part par une valeur appelée écart type du bruit vis-à-vis de la moyenne du bruit (standard déviation). Cet écart type du bruit peut être représenté d'autre part en fonction du signal par une courbe appelée courbe de bruit (Noise Curve). Un bruit est lié à une densité de probabilité portant sur les niveaux d'intensité. En vidéo, la densité de probabilité est celle d'un bruit gaussien qui est un bruit électronique indépendant du signal. La courbe de bruit représentative de l'écart type du bruit en fonction du signal est alors une constante. En rayons X, la densité de probabilité est celle d'un bruit poissonnien qui provient d'un bruit quantique et ce bruit quantique dépend du signal. La courbe de bruit représentative de l'écart type du bruit en fonction du signal dans le cas d'un bruit poissonnien est normalement linéaire et croissante. Un problème est que dans les systèmes aux rayons X se trouvent des dispositifs électroniques qui changent la forme de ces courbes de bruit. La courbe de bruit dans le cas d'un bruit poissonnien n'est en général pas linéaire et pas constamment croissante. Elle n'est pas celle d'un vrai bruit poissonnien car le bruit est passé à travers toute la chaîne électronique. Cette courbe de bruit doit donc être déterminée dans chaque cas.

Un procédé de traitement d'images qui détermine, en cours du traitement, la variance du bruit dans une séquence d'images numériques où le bruit est dépendant du signal est déjà connu de la publication intitulée "An adaptive technique for digital noise suppression in on-line portal imaging" par Konad W Leszcynski dans Phys. Med. Biol., 1990, Vol. 35, No 3,429-439, Printed in the UK. Ce document décrit une méthode de réduction du bruit qui prend en compte la variance du bruit. La variance de l'intensité des pixels est mesurée à cet effet directement (on-line) en cours du traitement d'images sur une région uniforme dans une image moyennée. Cette image moyennée est une moyenne de N images vidéo individuelles. La variance est représentée en fonction de 1/N. La variance du bruit est réduite par ledit facteur N dans l'image moyennée. Donc la variance du bruit aléatoire est estimée par la pente de la variance locale.

Dans un premier exemple d'application, en imagerie, de rayons X, il est très important de réduire le bruit du fait que le signal appliqué au patient est en général très faible parce que les images sont en général très bruitées. Pour effectuer le travail de réduction du bruit dans une image, il est nécessaire d'évaluer le bruit, et donc de déterminer la courbe d'écart type du bruit en fonction du signal pour les raisons exposées plus haut. Dans un autre exemple d'application, en vidéo, on peut également avoir besoin de réduire le bruit avant codage parce que ce bruit contient des hautes fréquences, et que les hautes fréquences sont très coûteuses à coder.

La présente invention propose une solution à ce problème en fournissant un procédé de traitement d'image pour déterminer une courbe de bruit relative à une image, comprenant :

une acquisition d'une image formée de pixels ayant une intensité incluant une composante de signal et une composante de bruit dépendant du signal,
un découpage de l'ensemble des niveaux d'intensité de l'image en bandes de niveaux d'intensité substantiellement uniformes,
une détermination d'une pluralité de lois statistiques reliant des distributions des écarts du bruit sur des niveaux d'écart de bruit aux intensités dans lesdites bandes,
une détermination, sur la base des lois statistiques, d'une pluralité d'écarts types du bruit en fonction des niveaux d'intensité substantiellement uniformes de l'image,
et une détermination de la courbe de bruit de l'image comme une loi statistique des variations des écarts types du bruit en fonction desdits niveaux d'intensité de l'image.

Le procédé selon l'invention présente l'avantage qu'il est utilisable aussi bien pour l'estimation d'un bruit quantique que pour l'estimation d'un bruit électronique, c'est-à-dire pour l'estimation d'un bruit poissonnien comme pour l'estimation d'un bruit gaussien. Un autre avantage est que ce procédé peut être mis en oeuvre en temps réel.

Un procédé de traitement d'image pour réduire le bruit dans une image comprend la mise en oeuvre d'un tel procédé de détermination de la courbe de bruit d'une image pour évaluer le bruit dans l'image à traiter ou dans une séquence d'images.

Un appareil d'imagerie médicale, ayant des moyens pour réduire le bruit dans une image médicale numérique bruitée, comprend un système d'acquisition d'une image formée de pixels ayant une intensité incluant une composante de signal et une composante de bruit, et un système de traitement d'image qui a un accès aux données de l'image et à un système d'affichage d'images et qui comprend un microprocesseur pour mettre en oeuvre un tel procédé de réduction du bruit d'une image ou d'une séquence d'images.

L'invention est décrite ci-après en détail en référence aux figures schématiques annexées dont :

- la FIG.1 qui montre un diagramme des étapes d'un procédé de détermination de la courbe de bruit et de réduction du bruit,
- la FIG.2 qui représente une image de départ $J_0$,
- la FIG.3 qui représente un histogramme H sous forme d'image de points Hk = (QSk, QMk),
- la FIG.4 qui illustre la construction de l'histogramme H,
- la FIG.5 qui illustre la détermination du maximum HkMax des P courbes statistiques Hk = f(QSk) à QMk = constante,
- la FIG.6 qui montre une courbe de bruit NC,
- la FIG.7 qui représente un appareil médical à rayons X.

Le principe du procédé selon l'invention repose sur la propriété d'additivité de la variance du bruit ou plus précisément sur une propriété de croissance de écart type. En ce qui concerne l'écart type du bruit, on peut écrire que l'écart type du bruit plus signal, notée S(B + Sg) est toujours supérieur à l'écart type du bruit seul noté S(B) selon la formule suivante :

$$S(B+Sg) > S(B) \tag{1}$$

Cette formule signifie que le bruit bien que dépendant du signal est distinct du signal. Une autre relation vient corroborer cette affirmation. La variance du bruit plus signal est égale à la variance du bruit augmentée de la variance du signal, ce que l'on écrit :

$$\text{Variance } (B+Sg) = \text{Variance } (B) + \text{Variance } (Sg) \tag{2}$$

avec

$$\text{Variance } (B) = [S(B)]^2 \tag{3}$$

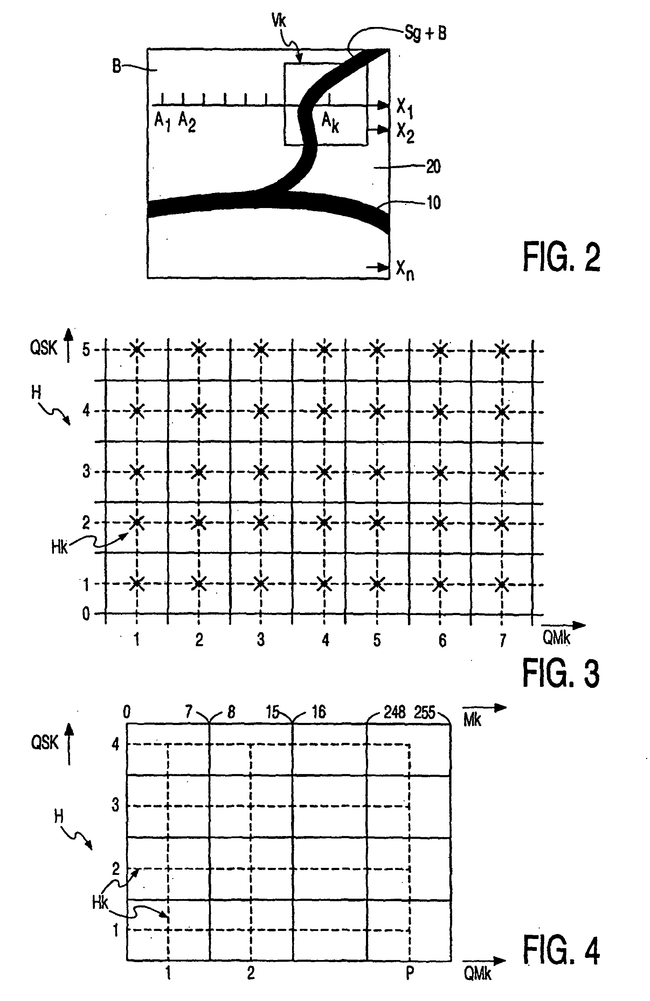

En référence à la FIG.2, dans une image de départ Jo, telle qu'une image de rayons X, le signal Sg est surtout constitué par des bords 10 d'objet. Le fond 20 montre essentiellement du bruit B. Les connaissances générales de l'homme du métier enseignent qu'il faut séparer le signal du bruit avant d'estimer le bruit, et que, à cet effet, on peut extraire les bords. Ce genre de méthode connue comprend : la détection des bords puis l'extraction des bords. Une telle méthode connue comporte de nombreux désavantages. En effet, il est difficile de bien estimer les bords et de les détecter de manière certaine. Il en résulte qu'il est difficile de les extraire car, soit on extrait trop d'informations, soit on en extrait pas assez. En outre, le fait de supprimer les bords modifie la densité de probabilité du bruit. Ce qui fait que, à l'issue de l'extraction des bords, l'estimation du bruit est biaisée par cette action. Selon l'invention, au lieu de séparer le signal Sg et le bruit B de manière explicite, on sépare le signal et le bruit de manière statistique.

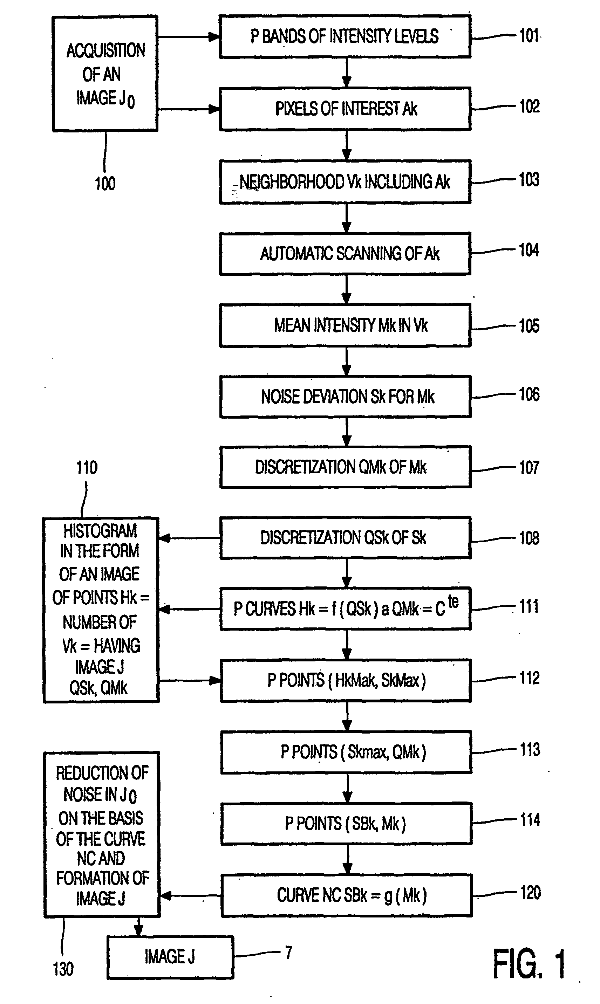

En référence à la FIG.1 qui représente les étapes du procédé sous forme d'un diagramme, ce procédé comprend :

1) L'acquisition 100 d'une image $J_0$ formée de pixels Ak ayant chacun une adresse k appartenant à un ensemble [1,K] et ayant une intensité incluant une composante de signal Sg et une composante de bruit B dépendant du signal.

2) Un découpage 101 des niveaux d'intensité de l'image en bandes. Les étapes du présent procédé visent à séparer le bruit du signal de manière statistique en se fondant sur le fait que dans les zones d'image où il y a du signal, par exemple la zone 10 de la FIG.2, il y a également du bruit dont écart type du signal plus bruit est toujours supérieur à l'écart type relatif aux zones où il n'y a que du bruit telles que les zones 20 de la FIG.2. Le principe de l'invention repose également sur le fait que le bruit B dépend du signal Sg. Comme le bruit dépend du niveau moyen local d'intensité, dans cette étape, l'ensemble des niveaux d'intensité de l'image est découpé en un nombre P de bandes de niveaux d'intensité, numérotées 1 à P, chaque bande comprenant des niveaux d'intensité substantiellement constants. Pour chaque bande, il existe un écart type du bruit, noté Sk, par rapport à la moyenne notée Mk des niveaux d'intensité dans la bande. Il en résulte que dans chacune des P bandes de niveaux d'intensité se trouvent différents écarts types du bruit possibles Sk avec un maximum correspondant à une présence concomitante de signal Sg et de bruit B.

3) Une détermination 102 de pixels d'intérêt dans l'image, notés Ak. L'image $J_0$ telle qu'illustrée par la FIG.2 peut contenir tous les pixels d'origine ou être sous-échantillonnée,

4) Une détermination 103 d'un voisinage Vk comprenant un nombre de pixels entourant chaque pixel d'intérêt Ak, et comprenant aussi ce pixel d'intérêt Ak. Le voisinage Vk est en général carré ou rectangulaire comme montré sur la FIG.2 pour la simplicité des calculs. Les cercles ou les disques conduisent à des calculs plus compliqués.

5) Un balayage 104 de l'image selon les pixels d'intérêt Pk munis de leur voisinage Vk. De préférence, l'image est balayée selon un système de balayage standard connu de l'homme du métier par exemple de gauche à droite et du haut vers le bas sur des droites parallèles X1, X2, Xn comme montré sur la FIG.2. Chaque pixel en cours de traitement est appelé pixel courant Ak.

6) Une détermination 105 d'une moyenne locale d'intensité Mk dans le voisinage Vk. La moyenne locale d'intensité Mk déterminée est affectée au pixel courant Ak. La moyenne locale d'intensité peut être déterminée selon la formule :

$$Mk = \frac{1}{N} \sum_{j \in Vk} Ij \quad (4a)$$

où I est intensité des pixels considérés, j est la numération des pixels à l'intérieur du voisinage Vk et N est le nombre des pixels contenus dans le voisinage Vk.

Pour simplifier les calculs, la moyenne locale d'intensité peut être calculée selon la formule :

$$Mk = Ck \qquad\qquad (4b)$$

où Ck est la valeur de l'intensité du pixel central c'est-à-dire du pixel courant Ak à l'intérieur du voisinage Vk.

7) Une détermination 106 de l'écart type du bruit Sk correspondant à ladite moyenne d'intensité Mk. L'écart type du bruit Sk peut être calculé selon la formule :

$$Sk = \sqrt{\frac{1}{N} \Sigma (Mk\text{-}Ij)^2} \qquad\qquad (5a)$$

Dans cette formule, l'écart type du bruit Sk est calculé comme la racine carrée de la variance du bruit.

Dans une méthode de calcul simplifiée, la valeur de Sk peut être calculée selon la formule :

$$Sk = \frac{1}{N} \Sigma |(Ck\text{-}Ij)| \qquad\qquad (5b)$$

Le choix entre le calcul complet des valeurs de Mk et Sk selon les formules (4a) et (5a) et le calcul simplifié de Mk et Sk selon les formules (4b) et (5b) n'est pas dynamique. Cest un choix que l'on fait au départ du procédé et qui ne change pas d'un pixel à l'autre. Les deux méthodes demandent des puissances de calcul différentes.

Le procédé comprend alors :

8) Une discrétisation 107, 108 des valeurs moyennes locales d'intensité Mk et des écarts types Sk correspondant, les valeurs discrétisées étant notées respectivement QHk et QSk ;

A cet effet, la discrétisation 107 des valeurs moyennes locales d'intensité Mk est effectuée en prenant la partie entière E(Mk) de la valeur trouvée pour Mk et en effectuant une division entière avec un coefficient de normalisation noté $QM_{norm}$. En général $QM_{norm}$ égale une puissance de 2. On écrit :

$$QMk = E(Mk)/QM_{norm} \qquad\qquad (6a)$$

La discrétisation 108 des écarts types du bruit Sk est d'autre part effectuée en prenant la partie entière E(Sk. $QS_{norm}$) de la valeur trouvée Sk multipliée par un coefficient de normalisation noté $QS_{norm}$, on écrit :

$$QSk = E[(Sk) \times QS_{norm}] \tag{6b}$$

En général $QS_{norm}$ = 1 ou 2.

Tout autre méthode de discrétisation connue de l'homme du métier peut être utilisée dans le même but.

9) Une construction 110 d'un histogramme H comme une image bidimensionnelle illustrée par la FIG.3 dont les points sont des paramètres statistiques Hk qui ont pour coordonnées les moyennes locales discrétisées QMk d'une part et les écarts types discrétisés QSk d'autre part et qui ont pour troisième dimension variable dans ces coordonnées, comparable à l'intensité d'un point d'image, le dénombrement Hk des pixels ayant une moyenne locale discrète donnée QMk et un écart type du bruit discrétisé QSk correspondant.

La FIG.4 illustre un exemple de construction de histogramme H. En abscisse, les niveaux de gris ou d'intensité de l'image sont portés de manière à déterminer les P bandes de niveaux d'intensité dont le nombre dépend du coefficient de normalisation $QM_{norm}$. Si $QM_{norm}$ = 8, les bandes verticales ont une largeur de 8 niveaux d'intensité. Les voisinages Vk de l'image $J_0$ produisent une moyenne locale d'intensité Mk comprise dans une des bandes M1 à MP. Pour chaque voisinage Vk, de moyenne discrétisée QMk, un écart type discrétisé QSk correspondant est d'autre part calculé. Les écarts types discrétisés QSk sont portés en ordonnée. Si $QS_{norm}$ = 1, on détermine des cases, où les écarts types sont séparés de 1 niveau d'intensité, qui se superposent dans chaque bande 1 à P. Chaque moyenne locale discrétisée QMk et l'écart type correspondant discrétisé QSk forment un point (QMk, QSk) dans une case de l'histogramme. Au fur et à mesure que l'image Jo est balayée, le nombre Hk des points dans chaque case est incrémenté. L'ensemble forme un histogramme en forme d'image de points où les points ont pour intensité le dénombrement Hk des points ayant mêmes coordonnées (QMk,QSk). Les coefficients de normalisation $QM_{Norm}$ et $QS_{norm}$ sont déterminés de telle façon qu'il y ait un nombre raisonnable P de bandes dans l'histogramme H, et qu'il y ait des valeurs Hk raisonnables dans les cases, c'est-à-dire pour qu'il y ait peu de cases vides ou ayant un élément Hk seulement égal à 1.

10) Une détermination 111, sur la base de l'histogramme H, de relations statistiques entre les valeurs des paramètres statistiques Hk et les valeurs des écarts types discrétisés QSk pour chaque valeur d'intensité locale discrète QMk. Il en résulte des lois statistiques notées f en nombre P égal au nombre P de valeurs moyennes d'intensité discrétisées QMk que l'on a déterminé ou nombre P des bandes de l'histogramme H.

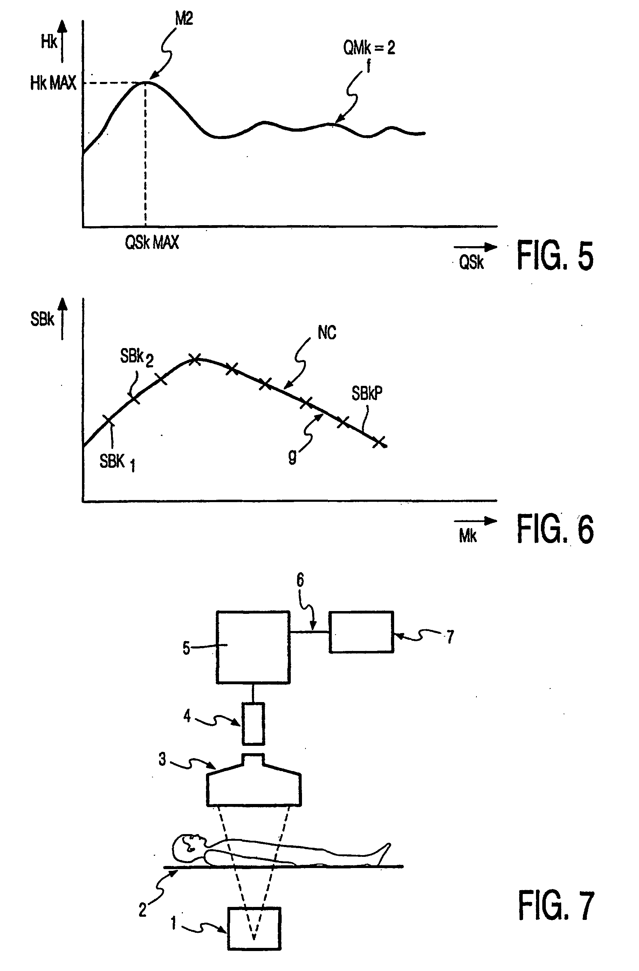

La FIG.5 montre à titre d'exemple une telle loi statistique f établie pour Hk = f(QSk) dans la bande 2 de l'histogramme H où QMk = 2, cette bande étant délimitée par les niveaux d'intensité 8 à 15 comme sur la FIG.4.

11) Un traitement 112 des P lois statistiques. Chacune de ces lois statistiques f montre un maximum principal ou premier maximum comme il résulte du principe sur lequel repose l'invention selon lequel il existe un maximum résultant de la participation concomitante du signal et du bruit (relations (1) et (2)) et qui a été exposé précédemment. Ce maximum est déterminé dans une opération 112 et, pour ce maximum noté M1 à MP de chaque courbe f parmi les P courbes, un paramètre statistique maximal noté Hkmax est trouvé en relation avec un écart type du bruit spécifique correspondant noté QSkmax. S'il y a P lois statistiques, il y a donc P maxima M1 à MP de ces courbes f obtenus dans l'opération 112.

12) Une opération 113 de recherche, pour tout HkMax, des P valeurs moyennes locales d'intensité associées QMk, respectivement pour les P valeurs de l'écart type du bruit spécifique QSkMax correspondantes. En référence à la FIG.6, on a ainsi déterminé P points caractérisés respectivement par des valeurs de coordonnées QSkMax, QMk.

13) Une opération 114 de détermination des valeurs non quantifiées qui correspondent respectivement aux coordonnées QSkMax, QMk des dits P points. A partir de QSkMax, on détermine l'écart du bruit non quantifié noté SkMax qui correspond à chaque maximum M1 à MP. Cette opération permet de déterminer l'écart type du bruit noté SBk qui correspond à une tranche de moyenne Mk. En effet, l'écart type du bruit SBk est une relation linéaire de SkMax où les coefficients dépendent du nombre de pixels contenus dans le voisinage Vk, selon l'expression :

$$SBk = [N/(N-1)]^{1/2} SkMax \tag{7}$$

On détermine en outre l'intensité moyenne non quantifiée Mk à partir de la moyenne quantifiée QMk par une opération $QMk^{-1}$ connue de l'homme du métier.

14) Une détermination 120 d'une loi statistique NC de variation de écart type du bruit en fonction du signal dans l'image sur la base des variations desdits écarts types du bruit SBk comme une fonction g des moyennes d'intensité associées Mk correspondant aux P points ainsi analysés, et une construction de la courbe appelée courbe de bruit (Noise Curve) illustrée à titre d'exemple par la FIG.6 qui représente SBk = g(Mk).

15) Une opération 130 de réduction du bruit de l'image $J_0$ sur la base de la courbe NC pour fournir une image débruitée J, par toute méthode connue de l'homme du métier nécessitant la connaissance de la courbe de bruit.

Le procédé peut donc être appliqué à la réduction du bruit dans une image de rayons X. Par un balayage automatique et systématique de l'image de rayons X notée $J_0$, telle qu'acquise dans l'opération 100, le bruit déduit de la courbe NC est extrait de l'intensité de chaque pixel. Dans le cas où une séquence d'images est acquise, le bruit ne variant pas beaucoup, l'extraction du bruit peut être mise à jour par exemple toutes les 10 images ou bien toutes les secondes, ce qui permet de former une séquence d'images débruitée qui peut être examinée en temps réel au moyen d'un dispositif d'affichage 7.

A titre d'exemple, en référence à la FIG.7, un appareil d'imagerie médicale comprend un système de radiographie numérisée ayant des moyens pour mettre en oeuvre la méthode de réduction du bruit décrite plus haut. Cet appareil comprend une source 1 de rayons X, une table 2 pour recevoir le patient, un dispositif récepteur des rayons X ayant traversé le patient, et en particulier un dispositif intensification d'image 3 couplé à un tube vidéo 4 qui fournit des données à un système 5 de traitement d'image comprenant un microprocesseur.

Ce dernier comprend plusieurs sorties dont une sortie 6 couplée à un moniteur 7 pour la visualisation des images traitées ou à traiter, ou bien de séquences d'images.

L'image radiographique numérisée peut contenir 512 x 512 ou 1024 x 1024 pixels codés sur 8 bits ou 10 bits. Chaque pixel peut être ainsi affecté d'un parmi 256 ou 1024 niveaux d'intensité. Par exemple, les régions sombres ont un niveau d'intensité faible, et les régions claires de l'image ont un niveau d'intensité élevé.

L'image numérisée peut être obtenue en mode fluoroscopique. L'invention peut trouver son application particulièrement dans le traitement d'images artériographiques.

Le traitement de l'image numérique selon le procédé décrit plus haut est mis en oeuvre dans ses différentes étapes et opérations dans le système 5. Les données peuvent être stockées dans une zone mémoire non représentée. Des moyens d'enregistrement non représentés peuvent être en outre utilisés.

## Revendications

**1.** Procédé de traitement d'image pour déterminer une courbe de bruit (NC) relative à une image, comprenant :

une acquisition (100) d'une image ($J_0$) formée de pixels ayant une intensité incluant une composante de signal et une composante de bruit dépendant du signal,

un découpage (101) de l'ensemble des niveaux d'intensité de l'image en bandes (QMk) de niveaux d'intensité substantiellement uniformes (Mk),

une détermination (111) d'une pluralité de lois statistiques (f) reliant des distributions (Hk) des écarts du bruit sur des niveaux (QSk) d'écart de bruit aux intensités dans lesdites bandes (QMk),

une détermination (114), sur la base des lois statistiques (f), d'une pluralité d'écarts types du bruit (SBk) en fonction des niveaux d'intensité substantiellement uniformes (Mk) de l'image,

et une détermination (120) de la courbe de bruit (NC) comme une loi statistique (g) des variations des écarts types du bruit (SBk) en fonction desdits niveaux d'intensité (Mk) de l'image.

**2.** Procédé selon la revendication 1, comprenant :

une définition (110) de paramètres statistiques (Hk), l'un desdits paramètres statistiques représentant un dénombrement de pixels ayant substantiellement un même niveau (QSk) d'écart du bruit vis-à-vis du niveau d'intensité d'une bande (QMk) de l'image,

une détermination (111) de ladite pluralité de lois statistiques de distribution comme des relations (f) qui relient respectivement des paramètres statistiques (Hk) à des niveaux d'écarts du bruit (QSk) pour chaque bande (QMk), et, pour chacune de ces lois statistiques, une détermination (112) d'un paramètre statistique maximal (HMax) relié à un écart du bruit spécifique correspondant (SkMax),

une détermination (113,114) pour chacun des écarts du bruit spécifique (SkMax) d'un écart type du bruit (SBk) en correspondance avec un niveau d'intensité substantiellement uniforme (Mk) d'une bande (QMk), et une détermination (120) de la courbe de bruit (NC) comme une relation (g) reliant les écarts type du bruit (SBk) auxdits niveaux d'intensité (Mk) des bandes (QMk).

**3.** Procédé selon la revendication 2, comprenant pour la détermination des bandes de niveaux d'intensité et des niveaux d'écarts du bruit :

une détermination (102) de pixels d'intérêt (Pk) dans l'image, ayant une adresse (k $\in$ [1,K]),

une détermination (103) d'un voisinage (Vk) comprenant un nombre de pixels entourant un pixel d'intérêt (Pk) ainsi que ce pixel d'intérêt,

un balayage (104) de l'image selon les pixels d'intérêt appelés pixels courants (Pk) munis de leur voisinage (Vk),

une détermination (105) d'une valeur moyenne d'intensité (Mk) dans le voisinage (Vk) affectée au pixel courant (Pk),

une détermination (106) de l'écart du bruit (Sk) correspondant à ladite moyenne d'intensité (Mk).

4. Procédé selon la revendication 3, comprenant en outre, pour la détermination des paramètres statistiques (Hk) :

une discrétisation (107,108) des valeurs moyennes locales d'intensité (QMk) et des écarts du bruit (QSk) correspondants,

une construction (110) d'un histogramme comme une image bidimensionnelle dont les points sont les paramètres statistiques (Hk), qui ont pour coordonnées les moyennes locales discrétisées (QMk) d'une part et les écarts du bruit discrétisés (QSk) d'autre part, et qui ont pour dimension variable dans ces coordonnées le dénombrement (Hk) des pixels ayant une moyenne locale discrète donnée et un écart type du bruit discrétisé correspondant.

5. Procédé selon la revendication 4, comprenant en outre la détermination (111) des lois statistiques, sur la base de l'histogramme, comme une relation (f) entre les valeurs des paramètres statistiques (Hk) et des écarts du bruit discrétisés (QSk) pour chaque valeur d'intensité locale discrète (QMk).

6. Procédé selon la revendication 5, comprenant :

une détermination (114) des valeurs non discrétisées (SBk) appelées écarts types du bruit qui correspondent aux écarts du bruit discrétisées (QSkMax) spécifiques, et une détermination des valeurs non discrétisées des niveaux d'intensité correspondants (Mk).

7. Procédé selon la revendication 6, où la moyenne locale d'intensité est donnée par un calcul selon la relation :

$$Mk = \frac{1}{N} \sum_{j \in Vk} Ij$$

et l'écart type du bruit associé est donné par un calcul selon la relation :

$$Sk = \sqrt{\frac{1}{N} \sum_{j \in Vk} (Ck\text{-}Ij)^2}$$

8. Procédé selon la revendication 6, où la moyenne locale d'intensité et l'écart type du bruit associé sont donnés respectivement pour des calculs selon les relations simplifiées :

$$Mk = Ck$$

et

$$Sk = \frac{1}{N} \sum_{j \in Vk} |(Ck\text{-}Ij)|$$

9. Procédé de traitement d'image pour réduire le bruit dans une image, comprenant la mise en oeuvre d'un procédé selon l'une des revendications précédentes pour évaluer le bruit dans l'image à traiter ou dans une séquence d'images avant de le réduire.

10. Appareil d'imagerie médicale, ayant des moyens pour réduire le bruit dans une image médicale numérique bruitée, comprenant un système d'acquisition d'une image formée de pixels ayant une intensité incluant une composante de signal et une composante de bruit, et un système de traitement d'image qui a un accès aux données de l'image et à un système d'affichage d'images et qui comprend un microprocesseur pour mettre en oeuvre un procédé selon la revendication 9.

**Patentansprüche**

1. Bildverarbeitungsverfahren zur Bestimmung einer Rauschkurve (NC) in Bezug auf ein Bild mit:

   Einer Aufnahme (100) eines aus Pixeln gebildeten Bildes ($J_0$) mit einer eine signalabhängigen Signalkomponente und Rauschkomponente einschließenden Intensität,
   einer Aufteilung (101) der gesamten Intensitätsebenen des Bildes in Bänder (QMk) mit grundsätzlich einheitlichen Intensitätsebenen (Mk),
   einer Bestimmung (111) einer Vielzahl von statistischen Gesetzen (f) zur Verbindung der Verteilungen (Hk) der Rauschabweichungen auf Rauschabweichungsniveaus (QSk) mit Intensitäten in den besagten Bändern (QMk),
   einer Bestimmung (114) auf der Grundlage der statistischen Gesetze (f) einer Vielzahl von Standardabweichungen des Rauschens (SBk) unter Berücksichtigung der grundsätzlich einheitlichen Intensitätsebenen (Mk) des Bildes, und,
   einer Bestimmung (120) der Rauschkurve (NC) des Bildes als ein statistisches Gesetz (g) der Variationen der Standardabweichungen des Rauschen (SBk) unter Berücksichtigung der besagten Intensitätsebenen (Mk) des Bildes.

2. Verfahren nach Anspruch 1, das enthält:

   Eine Definition (110) statistischer Parameter (Hk), wobei einer der besagten statistischen Parameter eine Aufzählung von Pixeln mit grundsätzlich einem selben Rauschabweichungsniveau (QSk) hinsichtlich der Intensitätsebene eines Bands (QMk) des Bildes darstellt,
   eine Bestimmung (111) der besagten Vielzahl von statistischen Verteilungsgesetzen als Relationen (f), die respektive statistische Parameter (Ilk) mit Rauschabweichungsniveaus (QSk) für jedes Band (QMk) verbinden, und, für jedes dieser statistischen Gesetze, eine Bestimmung (112) eines maximalen statistischen Parameters (HMax), verbunden mit einer entsprechenden spezifischen Rauschabweichung (SkMax),
   eine Bestimmung (113,114) für jede der spezifischen Rauschabweichungen (SkMax) einer Standard-Rauschabweichung (SBk) in Entsprechung mit einer grundsätzlich einheitlichen Intensitätsebene (Mk) eines Bands (QMk), und eine Bestimmung (120) der Rauschkurve (NC) als eine Relation (g) zur Verbindung der Standardabweichungen des Rauschen (SBk) mit den besagten Intensitätsebenen (Mk) der Bänder (QMk).

3. Verfahren nach Anspruch 2, mit zur Bestimmung der Bänder der Intensitätsebenen und der Rauschabweichungsniveaus:

   Einer Bestimmung (102) von Pixeln von Interesse (Pk) im Bild mit einer Adresse (k$\in$ [1,K]),
   einer Bestimmung (103) einer Umgebung (Vk) mit einer Anzahl von Pixeln, die ein Pixel von Interesse (Pk) umgeben, sowie dieses Pixel von Interesse,
   einer Abtastung (104) des Bildes entlang der mit ihrer Umgebung (Vk) versehenen Pixel von Interesse (Pk) mit der Bezeichnung laufende Pixel,
   einer Bestimmung (105) eines Durchschnittswerts der Intensität (Mk) in der Umgebung (Vk), zugeteilt an das laufende Pixel (Pk),
   einer Bestimmung (106) der Rauschabweichung (Sk), die dem besagten Intensitätsdurchschnitt (Mk) entspricht.

4. Verfahren nach Anspruch 3, das zur Bestimmung der statistischen Parameter (Hk) außerdem enthält:

   Eine Aufgliederung (107,108) der lokalen durchschnittlichen Intensitätswerte (QMk) und der entsprechenden Rauschabweichungen (QSk),

**EP 0 921 496 B1**

einen Aufbau (110) eines Histogramms als ein zweidimensionales Bild, dessen Punkte die statistischen Parameter (Hk) sind, deren Koordinaten einerseits die diskretisierten lokalen Durchschnitte (QMk) und andererseits die diskretisierten Rauschabweichungen (QSk) sind und deren variable Dimension in diesen Koordinaten der Aufzählung (Hk) der Pixel mit einem bestimmten diskreten lokalen Durchschnitt und einer entsprechenden diskretisierten Standard-Rauschabweichung entspricht.

5. Verfahren nach Anspruch 4, mit außerdem der Bestimmung (111) der statistischen Gesetze auf der Grundlage des Histogramms als eine Relation (f) zwischen den Werten der statistischen Parameter (Hk) und der diskretisierten Rauschabweichungen (QSk) für jeden diskreten lokalen Intensitätswert (QMk).

6. Verfahren nach Anspruch 5, das enthält:

Eine Bestimmung (114) der nicht diskretisierten Werte (SBk) mit der Bezeichnung Standardabweichungen des Rauschen, die den spezifischen diskretisierten Rauschabweichungen (QSkMax) entsprechen, und eine Bestimmung der nicht diskretisierten Werte der entsprechenden Intensitätsebenen (Mk).

7. Verfahren nach Anspruch 6, wobei der lokale Intensitätsdurchschnitt mit einer Berechnung gemäß der Relation erhalten wird:

$$Mk = \frac{1}{N} \sum_{j \in Vk} Ij$$

und die Standardabweichung des verbundenen Rauschen wird mit einer Berechnung gemäß der Relation erhalten:

$$Sk = \sqrt{\frac{1}{N} \, \Sigma Mk\text{-}Ij^2}$$

8. Verfahren nach Anspruch 6, wobei der lokale Intensitätsdurchschnitt und die verbundene Standardabweichung des Rauschen respektive mit den Berechnungen der vereinfachten Relationen erhalten werden:

$$Mk = Ck$$

und

$$Sk = \frac{1}{N} \sum_{j \in Vk} |Ck - Ij|$$

9. Bildverarbeitungsverfahren zur Verminderung des Rauschens in einem Bild, mit der Umsetzung eines Verfahren nach einem der vorhergehenden Ansprüche zur Bewertung des Rauschens im zu verarbeitende Bild oder in einer Bildsequenz vor dessen Verminderung.

10. Medizinisches Bildgebungsgerät mit Mitteln zur Verminderung des Rauschen in einem verrauschten digitalen medizinischen Bild, mit einem System zur Aufnahme eines aus Pixeln mit einer Intensität, die eine Signalkomponente und eine Rauschkomponente einschließt, gebildeten Bildes, und einem Bildverarbeitungssystem, welches Zugriff auf die Daten des Bildes und auf ein Bildanzeigesystem hat, und das einen Mikroprozessor zur Umsetzung eines Verfahrens nach Anspruch 9 beinhaltet.

**Claims**

1. An image processing method for determining a noise curve (NC) relating to an image, including:

acquisition (100) of an image ($J_0$) which is formed by pixels having an intensity which includes a signal component and a noise component which is dependent on the signal,

cutting (101) the set of intensity levels of the image into bands (QMk) with substantially uniform intensity levels (Mk),

determination (111) of a plurality of statistical rules (f) which link distributions (Hk) of the standard noise deviations at the levels (QSk) of the standard noise deviation to the intensities in said bands (QMk),

determination (114), on the basis of the statistical rules (f), of a plurality of standard noise deviations (SBk) as a function of substantially uniform intensity levels (Mk) of the image,

and determination (120) of the noise curve (NC) as a statistical rule (g) of the variations of the standard noise deviations (SBk) as a function of said intensity levels (Mk) of the image.

2. A method as claimed in Claim 1, including:

definition (110) of statistical parameters (Hk), one of said statistical parameters representing a number of pixels having substantially the same level (QSk) of the standard noise deviation relative to the intensity level of a band (QMk) of the image,

determination (111) of said plurality of statistical distribution rules as relations (f) which link statistical parameters (Hk) to levels of the standard noise deviation (QSk) for each band (QMk) and, for each of said statistical rules, determination (112) of a maximum statistical parameter (Hmax) which is linked to a corresponding specific standard noise deviation (Skmax),

determination (113, 114), for each of said specific standard noise deviations (Skmax), of a standard noise deviation (SBk) corresponding to a substantially uniform intensity level (Mk) of a band (QMk), and determination (120) of the noise curve (NC) as a relation (g) linking the standard noise deviations (SBk) to said intensity levels (Mk) of the bands (QMk).

3. A method as claimed in claim 2, which includes the following steps for the determination of the bands of intensity levels and of the standard noise deviation levels:

determination (102) of pixels of interest (Pk) in the image, having an address ($k \in [1,K]$),

determination (103) of a neighborhood (Vk) which contains a number of pixels which surround a pixel of interest (Pk) as well as said pixel of interest itself,

scanning (104) of the image on the basis of the pixels of interest, referred to as current pixels (Pk), with their neighborhood (Vk),

determination (105) of a mean intensity value (Mk) in the neighborhood (Vk) so as to be assigned to said current pixel (Pk),

determination (106) of the standard noise deviation (Sk) corresponding to said mean intensity value (Mk).

4. A method as claimed in Claim 3, which also includes the following steps for determining the statistical parameters (Hk):

discretization (107, 108) of mean local intensity values (QMk) and corresponding standard noise deviations (QSk),

construction (110) of a histogram as a two-dimensional image whose points are the statistical parameters (Hk), which have as their co-ordinates the discretized local mean values (QMk) and the discretized standard noise deviations (QSk), and whose variable dimension in these co-ordinates is the number (Hk) of pixels having a given discrete local mean value and a corresponding discretized standard noise deviation.

5. A method as claimed in Claim 4, which also includes the determination (111) of statistical rules, on the basis of the histogram, as a relation (f) between the values of statistical parameters (Hk) and discretized standard noise deviations (QSk) for each discrete local intensity value (QMk).

6. A method as claimed in Claim 5, including:

determination (114) of non-discretized values (SBk), referred to as standard noise deviations, which correspond to the specific discretized standard noise deviations (QSkMax), and determination of non-discretized values of corresponding intensity levels (Mk).

7. A method as claimed in Claim 6, in which the mean local intensity is given by calculation in conformity with the

relation:

$$Mk = \frac{1}{N} \sum_{j \in Vk} Ij$$

and the associated standard noise deviation is given by a calculation in conformity with the relation:

$$Sk = \sqrt{\frac{1}{N} \sum_{j \in Vk} (Ck-Ij)^2}$$

**8.** A method as claimed in Claim 6, in which the mean local intensity and the associated standard noise deviation are given by calculations performed in conformity with the simplified relations:

$$Mk=Ck$$

and

$$Sk = \frac{1}{N} \sum_{j \in Vk} |(Ck-Ij)| \quad , \text{respectively.}$$

**9.** An image processing method for reducing the noise in an image, including the execution of a method as claimed in one of the preceding Claims in order to evaluate the noise in an image to be processed, or in a sequence of images, before reducing the noise.

**10.** A medical imaging apparatus which is provided with means for reducing the noise in a noisy digital medical image, including a system for the acquisition of an image formed by pixels having an intensity which includes a signal component and a noise component, and an image processing system which has access to the data of the image and to an image display system and includes a microprocessor for carrying out a method as claimed in Claim 9.

FIG. 1

Flowchart contents:

- ACQUISITION OF AN IMAGE $J_0$ — 100
- P BANDS OF INTENSITY LEVELS — 101
- PIXELS OF INTEREST Ak — 102
- NEIGHBORHOOD Vk INCLUDING Ak — 103
- AUTOMATIC SCANNING OF Ak — 104
- MEAN INTENSITY Mk IN Vk — 105
- NOISE DEVIATION Sk FOR Mk — 106
- DISCRETIZATION QMk OF Mk — 107
- DISCRETIZATION QSk OF Sk — 108
- HISTOGRAM IN THE FORM OF AN IMAGE OF POINTS Hk = NUMBER OF Vk = HAVING IMAGE J QSk, QMk — 110
- P CURVES Hk = f ( QSk ) a QMk = $C^{te}$ — 111
- P POINTS ( HkMak, SkMax ) — 112
- P POINTS ( Skmax, QMk ) — 113
- P POINTS ( SBk, Mk ) — 114
- CURVE NC SBk = g ( Mk ) — 120
- REDUCTION OF NOISE IN $J_0$ ON THE BASIS OF THE CURVE NC AND FORMATION OF IMAGE J — 130
- IMAGE J — 7

FIG. 2

FIG. 3

FIG. 4

FIG. 5

FIG. 6

FIG. 7